# EUROPÄISCHE PATENTSCHRIFT

(11) **EP 3 752 407 B1**
(45) Veröffentlichungstag und Bekanntmachung des Hinweises auf die Patenterteilung: **21.06.2023**
(21) Anmeldenummer: 19706406.6
(22) Anmeldetag: 07.02.2019
(51) Int. Cl.: B62D 5/04

(54) **VERFAHREN ZUR BEREITSTELLUNG EINER LENKKRAFTUNTERSTÜTZUNG FÜR EIN ELEKTROMECHANISCHES LENKSYSTEM EINES KRAFTFAHRZEUGES MIT EINEM REDUNDANT AUSGELEGTEN STEUERGERÄT**
METHOD FOR PROVIDING STEERING ASSISTANCE FOR AN ELECTROMECHANICAL STEERING SYSTEM OF A MOTOR VEHICLE COMPRISING A REDUNDANTLY DESIGNED CONTROL DEVICE
PROCÉDÉ D'ASSISTANCE A LA DIRECTION D'UN SYSTÈME DE DIRECTION ÉLECTROMÉCANIQUE D'UN VÉHICULE AUTOMOBILE COMPORTANT UNE UNITÉ DE COMMANDE REDONDANTE

(30) Priorität: 12.02.2018 DE 102018103082
(43) Veröffentlichungstag der Anmeldung: 23.12.2020
(73) Patentinhaber: thyssenkrupp Presta AG, 9492 Eschen (LI); thyssenkrupp AG, 45143 Essen (DE)
(72) Erfinder: BALOGH, Andras, 2463 Tordas (HU); HORVATH, Gergely, 6085 Fülöpszállás (HU); VARGA, Tamas, 1119 Budapest (HU); PINTER, Gergely, 1115 Budapest (HU)
(74) Vertreter: thyssenkrupp Intellectual Property GmbH
(86) Internationale Anmeldenummer: PCT/EP2019/052988
(87) Internationale Veröffentlichungsnummer: WO 2019/154903

(56) Entgegenhaltungen:
- EP-A1- 3 208 179
- DE-A1-102012 021 436
- DE-T5-112015 005 022

## Beschreibung

Die vorliegende Erfindung betrifft ein Verfahren zur Bereitstellung einer Lenkkraftunterstützung für ein elektromechanisches Lenksystem eines Kraftfahrzeuges mit den Merkmalen des Oberbegriffs des Anspruchs 1 und ein elektromechanisches Lenksystem für ein Kraftfahrzeug, das ein Steuergerät aufweist, welches das Verfahren ausführen kann.

Derzeit verfügbare EPS-Systeme sind "fail-silent" ausgelegt, d.h. bei Erkennung einer Fehlfunktion (entweder im Datenverarbeitungssystem oder der Leistungselektronik) wird die Unterstützung der Servolenkung abgeschaltet, um einen unerwünschten Zustand, wie beispielsweise das Blockieren des Lenkrads, zu vermeiden. Dieser Ansatz ist für autonomes oder semi-autonomes Fahren nicht geeignet. In einem autonomen Fahrmodus kann das Kraftfahrzeug mit Hilfe verschiedener Sensoren des Fahrerassistenzsystems die Umgebung des Kraftfahrzeugs erfassen und das Kraftfahrzeug durch Vorgabe vorbestimmter Werte vollkommen automatisch steuern. In einem semi-autonomen Fahrmodus hingegen lenkt das Fahrerassistenzsystem durch Vorgabe eines vorbestimmten Lenkeinschlagwinkels automatisch. Dies ist beispielsweise bei einem semi-autonomen Einparkvorgang der Fall. Hierbei übernimmt das Fahrerassistenzsystem die Lenkung des Kraftfahrzeugs und der Fahrer betätigt das Gaspedal und die Bremse.

Für autonomes Fahren ist beispielsweise das Qualitätskriterium Automotive Safety Integrity Level (ASIL) vorgeschrieben, das eine bestimmte Ausfallsicherheit bzw. Verfügbarkeit der Lenkung gewährleistet. Um diesen höheren Sicherheitsanforderungen beim semi-autonomen und autonomen Fahren gerecht zu werden, werden redundante Konzepte vorgeschlagen.

Die Offenlegungsschrift DE 10 2015 104 850 A1 offenbart ein redundantes Konzept mit einen ersten Teilantrieb mit einer ersten Ansteuerelektronik, einem ersten Zwischenkreis, einer ersten Leistungsendstufe und einer ersten Wicklungsgruppe eines Motors und einen zweiten Teilantrieb mit einer zweiten Ansteuerelektronik, einem zweiten Zwischenkreis, einer zweiten Leistungsendstufe und einer zweiten Wicklungsgruppe des Motors, wobei eine galvanische Trennung zwischen der ersten und zweiten Ansteuerelektronik, dem ersten und zweiten Zwischenkreis, der ersten und zweiten Leistungsendstufe und der ersten und zweiten Wicklungsgruppe vorliegt. Durch eine galvanische Trennung wird eine größtmögliche Unabhängigkeit der einzelnen Antriebe sichergestellt. Hierdurch wird erreicht, dass ein Defekt sich nicht in mehreren Teilantrieben eines redundanten Antriebs ausbreiten kann und somit trotz Redundanz zu einem Totalausfall der Funktionsfähigkeit des elektrischen Lenksystems führt. Die Kommunikation zwischen den Teilantrieben erfolgt dabei kostspielig mittels eines Fahrzeugbusses.

EP 2 778 021 beschreibt ein Verfahren zum Erzeugen und Verifizieren eines Ausgabebefehls zur Verwendung in einem Servolenkungssystem, wobei ein primärer und sekundärer Verarbeitungspfad vorgesehen sind und der sekundäre Verarbeitungspfad eine Rückfallebene bildet. In dem Fall, dass in dem primären Verarbeitungspfad ein Fehler detektiert wird, übernimmt der sekundäre Verarbeitungspfad die Verarbeitung und Bereitstellung des Ausgabebefehls.

Aus der DE 11 2015 005 022 T5 ist eine elektrische Servolenkvorrichtung mit einem Elektromotor zur Unterstützung eines Fahrers beim Lenken bekannt, wobei der Elektromotor von einer Motorantriebsvorrichtung angetrieben wird.

Die Motorantriebsvorrichtung weist dabei eine Mehrzahl von Steuersystemen zur Steuerung von Spulengruppen des Motors auf. Sollte ein Fehler in der Ansteuerung einer Spulengruppe auftreten, kann der Elektromotor weiter betrieben werden, indem die verbleibenden Spulengruppen von den noch betriebsbereiten Steuersystemen weiter angesteuert werden.

Weiter ist aus der DE 10 2015 116 937 A1 ein gattungsgemäßes Verfahren zum Betreiben eines Lenksystems mit zwei Aktorpfaden, die jeweils einen Elektromotor und eine Steuereinheit umfassen, bekannt. Dabei kann eine der Steuereinheiten als Master aktiviert sein und eine als Slave, wobei der Slave-Pfad das von dem Master bestimmte Unterstützungsmoment empfängt.

Es ist Aufgabe der vorliegenden Erfindung, ein verbessertes Verfahren zur Bereitstellung einer Lenkkraftunterstützung für ein elektromechanisches Lenksystem eines Kraftfahrzeuges anzugeben bei dem auch im Fehlerfall die Lenkkraftunterstützung sicher gestellt werden kann.

Diese Aufgabe wird von einem Verfahren zur Bereitstellung einer Lenkkraftunterstützung für ein elektromechanisches Lenksystem eines Kraftfahrzeuges mit den Merkmalen des Anspruchs 1 gelöst und einem elektromechanischen Lenksystem für ein Kraftfahrzeug, das das vorgenannte Verfahren ausführen kann. In den Unteransprüchen sind vorteilhafte Weiterbildungen der Erfindung genannt.

Demnach ist ein Verfahren zur Bereitstellung einer Lenkkraftunterstützung für ein elektromechanisches Lenksystem eines Kraftfahrzeuges vorgesehen, wobei das Lenksystem ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht, wenigstens zwei Elektromotoren oder einen Elektromotor mit wenigstens zwei Wicklungsgruppen zur Lenkkraftunterstützung, einen Drehmomentsensor, der zwischen einer mit dem Lenkrad verbundenen oberen Lenkwelle und der unteren Lenkwelle angeordnet ist, und eine elektronische Steuereinheit zur Berechnung der Lenkunterstützung umfasst. Die elektronische Steuereinheit weist ein redundantes Steuergerät mit einem primären Steuerpfad und einem sekundären Steuerpfad auf. Der primäre Steuerpfad weist eine primäre Recheneinheit, eine primäre Treiberstufe und ein primäres Leistungs-Modul und der sekundäre Steuerpfad eine sekundäre Recheneinheit, eine sekundäre Treiberstufe und ein sekundäres Leistungs-Modul auf. Das Verfahren umfasst folgende Schritte:
- Erfassen eines vom Fahrer aufgebrachten Lenkdrehmomentes mittels des Drehmomentsensors,
- Im fehlerfreien Fall, Berechnen eines primären und eines sekundären Motor-Soll-Drehmomentes in der primären Recheneinheit in Abhängigkeit des vom Fahrer aufgebrachten Lenkdrehmomentes und weiteren Eingangsgrößen,
- Weitergabe des primären Motor-Soll-Drehmomentes an eine primäre Motorregelung der primären Recheneinheit,
- Bestimmen von primären Motorströmen zum Betreiben eines primären Elektromotors oder einer primären Wicklungsgruppe des Elektromotors in der primären Motorreglung,
- Weitergabe des sekundären Motor-Soll-Drehmomentes von der primären Recheneinheit mittels einer Signalleitung an eine sekundäre Motorregelung der sekundären Recheneinheit,
- Bestimmen von sekundären Motorströmen zum Betreiben eines sekundären Elektromotors oder einer sekundären Wicklungsgruppe des Elektromotors in der sekundären Motorreglung der sekundären Recheneinheit.

Die redundante Struktur des Steuergerätes erlaubt eine Hilfskraftunterstützung auch für den Fall, dass eine Hardwarekomponente eines Steuerpfades ausfällt oder die Software fehlerhaft ist. Durch die Signalleitung zwischen den Recheneinheiten kann das redundante Steuergerät kostengünstig gehalten werden. Das redundante Konzept erreicht die für hoch automatisierte und autonome Fahrvorgänge geforderte Sicherheit.

Unter den Begriffen "primär" und "sekundär" ist nicht von vorneherein zu verstehen, dass die Module unterschiedlich sind oder eine unterschiedliche Priorität oder Fehleranfälligkeit haben. Sie können sowohl gleich als auch unterschiedlich sein.

Die Kommunikation über die Signalleitung erfolgt bevorzugt über Serial Peripheral Interface (SPI) oder Universal Asynchronous Receiver Transmitter (UART).

Erfindungsgemäß weist das Verfahren folgende weitere Schritte auf:
- Detektieren eines Fehlerzustandes in einem der Steuerpfade durch den fehlerbehafteten Steuerpfad,
- Abschalten der Lenkkraftunterstützung des fehlerbehafteten Steuerpfades.

Zudem stellt in einem Fehlerzustand eines der Steuerpfade der fehlerbehaftete Steuerpfad die Kommunikation mit der fehlerfreien Recheneinheit über die Signalleitung ein. Anhand der fehlenden Kommunikation detektiert der fehlerfreie Steuerpfad den Fehlerzustand. Es kann dadurch auf ein aktives Monitoring der Zustände der Steuerpfade verzichtet werden.

Vorteilhafterweise weist das Verfahren weitere Schritte auf:
- Falls der primäre Steuerpfad einen Fehler aufweist, Abschalten der Lenkkraftunterstützung durch den primären Elektromotor oder der primären Windung des Elektromotors,
- Berechnen des sekundären Motor-Soll-Drehmomentes in der sekundären Recheneinheit in Abhängigkeit des vom Fahrer aufgebrachten Lenkdrehmomentes und weiteren Eingangsgrößen,
- Weitergabe des sekundären Motor-Soll-Drehmomentes an die sekundäre Motorregelung der sekundären Recheneinheit,
- Bestimmen der sekundären Motorströme zum Betreiben des sekundären Elektromotors oder einer sekundären Wicklungsgruppe
- des Elektromotors in der sekundären Motorreglung der sekundären Recheneinheit.

Nur in diesem Fall führt die sekundäre Recheneinheit den Lenkungsalgorithmus zur Bestimmung des Motor-Soll-Drehmomentes aus. Es kann insbesondere aus Kostengründen vorteilhaft sein, wenn die primäre Recheneinheit an einen primären Kraftfahrzeug-Bus angeschlossen ist, wobei die sekundäre Recheneinheit mit dem Kraftfahrzeug über den primären Kraftfahrzeug-Bus mittels der zwischen der primären und sekundären Recheneinheit vorhandenen Signalleitung kommuniziert.

Es ist aber zur Erhöhung der Redundanz auch möglich, dass der primäre Steuerpfad an einen primären Kraftfahrzeug-Bus und der sekundäre Steuerpfad an einen vom primären Kraftfahrzeug-Bus getrennten sekundären Kraftfahrzeug-Bus angeschlossen ist.

Vorzugsweise umfassen die weiteren Eingangsgrößen wenigstens eine von folgenden Größen: Fahrzeuggeschwindigkeit, mittels eines Rotorlagesensors gemessene momentane Rotorposition, gemessenen Stromwerte in den Phasenwicklungen.

Zur Erhöhung der Redundanz kann der primäre Steuerpfad und der sekundäre Steuerpfad jeweils einen an die Stromversorgung angeschlossenen integrierten Schaltkreis aufweisen, der die Stromüberwachung der entsprechenden Recheneinheit und eines Rotorlagesensors übernimmt.

Vorzugsweise weist der primäre Steuerpfad und der sekundäre Steuerpfad jeweils eine externe Stromversorgung auf.

Es kann aus Kostengründen vorteilhaft sein, wenn die sekundäre Recheneinheit leistungsärmer als die primäre Recheneinheit ausgebildet ist.

Vorzugsweise ist die primäre und sekundäre Recheneinheit eine MCU. Es kann vorteilhaft sein, wenn die integrierten Schaltkreise SBCs sind.

Weiterhin ist ein elektromechanisches Lenksystem für ein Kraftfahrzeug vorgesehen, aufweisend ein mit einer unteren Lenkwelle verbundenes Lenkritzel, welches mit einer in einem Gehäuse entlang einer Längsachse verschieblich gelagerten Zahnstange zur Lenkung von Rädern in Eingriff steht, wenigstens einen Elektromotor zur Lenkkraftunterstützung, einen Drehmomentsensor, der zwischen einer mit dem Lenkrad verbundenen oberen Lenkwelle und der unteren Lenkwelle angeordnet ist und ein vom Fahrer eingebrachtes Drehmoment erfasst, und eine elektronische Steuereinheit zur Berechnung der Lenkkraftunterstützung, die ein redundantes Steuergerät aufweist, das dazu ausgebildet ist, das zuvor beschriebene Verfahren auszuführen.

Nachfolgend wird ein Ausführungsbeispiel der vorliegenden Erfindung anhand der Zeichnungen beschrieben. Gleiche Bauteile oder Bauteile mit gleichen Funktionen tragen gleiche Bezugszeichen. Es zeigen:
- Figur 1:: eine schematische Darstellung einer elektromechanischen Servolenkung, sowie
- Figur 2:: ein Blockdiagramm einer Steuereinheit der elektromechanischen Servolenkung.

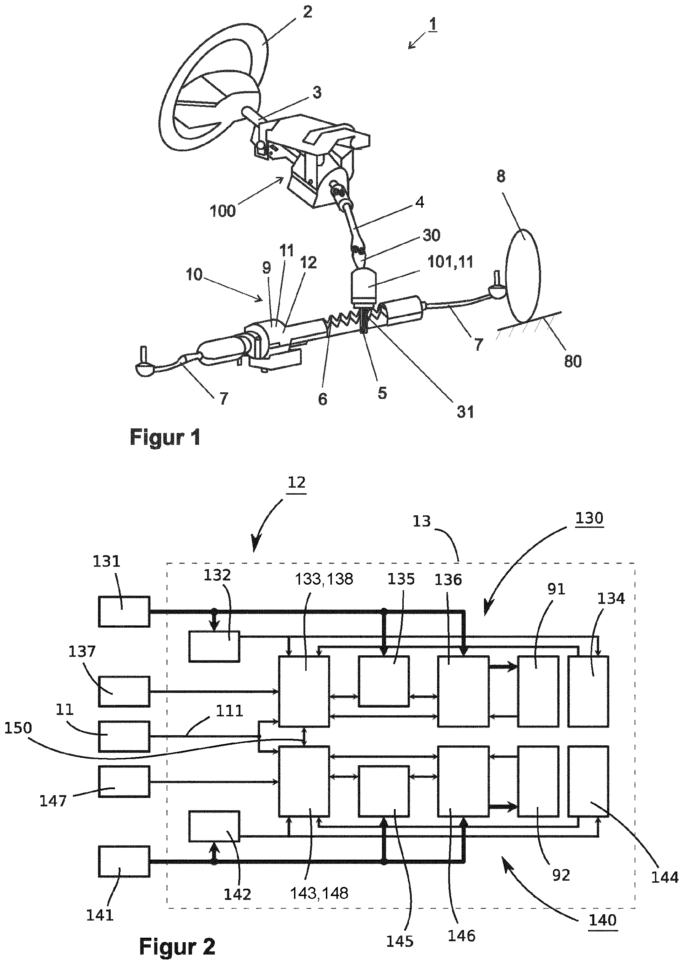

In der Figur 1 ist eine elektromechanische Kraftfahrzeugservolenkung 1 mit einem Lenkrad 2, das mit einer oberen Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 80 eine Rückwirkung, die der Lenkbewegung entgegen wirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen.

Die obere Lenkwelle 3 und die untere Lenkwelle 4 sind dreheleastisch über einen nicht gezeigten Drehstab miteinander gekoppelt. Eine Drehmomentsensoreinheit 11 erfasst die Verdrehung der oberen Lenkwelle 3 gegenüber der unteren Lenkwelle 4 als ein Maß des an der Lenkwelle 3 oder des Lenkrades 2 manuell ausgeübten Drehmomentes. In Abhängigkeit des von der Drehmomentsensoreinheit 11 gemessen Drehmoments 111 stellt die Servoeinheit 10 eine Lenkunterstützung für den Fahrer bereit. Die Servoeinheit 10 kann dabei als Hilfskraftunterstützungseinrichtung 10, 100, 101 entweder mit einer Lenkwelle 3, dem Lenkritzel 5 oder der Zahnstange 6 gekoppelt sein. Die jeweilige Hilfskraftunterstützung 10, 100, 101 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt. Die Servoeinheit 10 weist zur Berechnung der Lenkunterstützung eine elektronische Steuereinheit 12 auf.

Figur 2 zeigt ein Blockdiagramm der elektronischen Steuereinheit 12 des elektromechanischen Lenksystems. Die Steuereinheit 12 umfasst ein Steuergerät (ECU) 13. Das Steuergerät 13 ist redundant ausgelegt und weist einen primären Steuerpfad 130 und einen sekundären Steuerpfad 140 auf. Der primäre Steuerpfad 130 und der sekundäre Steuerpfad 140 sind in dem gezeigten Ausführungsbeispiel identisch aufgebaut, d.h. jeder der beiden Steuerpfade weist eine Stromversorgung, eine Recheneinheit, ein Leistungs-Modul, einen Elektromotor und die notwendigen Sensoren (Drehmoment, Phasenstrom und Rotorlage) auf. Dabei sind die Module des primären Steuerpfades im Folgenden als "primäre" Module und die Module des sekundären Steuerpfades als "sekundäre" Module benannt. Unter den Begrifflichkeiten "primär" und "sekundär" ist nicht zwangsläufig zu verstehen, dass es eine Gewichtung zwischen den Modulen gibt. Die Module können sowohl gleich als auch unterschiedlich ausgebildet sein.

Jeder Steuerpfad 130,140 weist eine externe Stromversorgung 131, 141, vorzugsweise eine Batterie, auf. An die Stromversorgung 131,141 ist jeweils ein integrierter Schaltkreis 132,142 angeschlossen, der jeweils die Stromüberwachung einer Recheneinheit 133,143 und eines Rotorlagesensors (RPS) 134,144 übernimmt. Die primäre und sekundäre Recheneinheit 133,143 ist bevorzugt ein Mikrokontroller (MCU). Der primäre und sekundäre integrierte Schaltkreis 132,142 kann beispielsweise ein System Basic Chip (SBC) sein. Die primäre und sekundäre Stromversorgung 131,141 versorgt weiterhin jeweils eine Treiberstufe 135,145 (engl. Gate-Driver-Unit (GDU)) und ein Leistungs-Modul 136,146 (engl. Power-Module) eines Steuerpfades 130,140.

Die primäre und sekundäre Recheneinheit 133,143 empfangen das vom Fahrer in das Lenkrad eingebrachte und von der Drehmomentsensoreinheit 11 gemessene Drehmoment 111. Weiterhin sind die primäre und sekundäre Recheneinheit 133,143 jeweils an einen separaten Kraftfahrzeug-Bus 137,147 angeschlossen, über den die Recheneinheit 133,143 Datensignale empfängt. Die primäre Recheneinheit 133 berechnet anhand des vom Fahrer in das Lenkrad eingebrachten Drehmoments 111 und weiteren Eingangsgrößen, wie zum Beispiel die über den jeweiligen Kraftfahrzeug-Bus 137,147 gesendete Fahrzeuggeschwindigkeit v und Messsignale vom Elektromotor, wie beispielsweise der mittels des Rotorlagesensors 134,144 gemessenen momentanen Rotorposition und/oder gemessene Stromwerte in den Phasenwicklungen, beide Motor-Soll-Drehmomente. Die Motor-Soll-Drehmomente werden dabei mittels eines Algorithmus berechnet, der beispielsweise eine sogenannte boost curve oder einen Lenksäulendrehmomentsteuerungsalgorithmus (engl. column torque control algorithms) umfasst. Das primäre Motor-Soll-Drehmoment wird an eine primäre Motorregelung 138 der primären Recheneinheit 133 weitergegeben, die daraus die primären Motorströme mittels PWM bestimmt. Das sekundäre Motor-Soll-Drehmoment wird über eine die Recheneinheiten verbindende Signalleitung 150 an eine sekundäre Motorregelung 148 der sekundären Recheneinheit 143 weitergegeben, die daraus die sekundären Motorströme mittels Pulsweitenmodulation (PWM) bestimmt. Ein primärer Motor 91 wird mit den primären Motorströmen bestromt und ein sekundärer Motor 92 wird entsprechend mit den sekundären Motorströmen bestromt, woraus ein gemeinsames Drehmoment zur Unterstützung der Lenkbewegung des Fahrers resultiert. Der primäre und sekundäre Motor 91,92 sind logisch miteinander verknüpft. Es können zwei physisch getrennte Motoren 91,92 oder ein einziger Motor 9 mit zwei Wicklungsgruppen vorgesehen sein. In dem Fall, dass einer der Motoren 91,92 bzw. eine der Wicklungsgruppen ausfällt, steht die Hälfte des nominalen Unterstützungsdrehmoments zur Verfügung.

Beide Steuerpfade 130,140 sind jeweils als "fail-silent" ausgelegt, d.h. jeder Steuerpfad kann eine eigene Fehlfunktion oder einen Fehlzustand feststellen und die Unterstützung durch den zugeordneten Motor bzw. Windung abschalten. Dies wird typischerweise durch Kombination eines ASIL-D-Mikrocontrollers mit verschiedenen Plausibilitätsprüfungen und einer Hardwarearchitektur erreicht, die in der Lage ist, den Elektromotor im Falle eines Fehlers (z. B. durch Phasenrelais) von dem Steuergerät zu trennen.

Da die Steuerpfade 130,140 redundant ausgelegt sind, kann das Steuergerät auch bei einer Fehlfunktion eines der Hardwarekomponenten eine Hilfskraftunterstützung bereitstellen. Die beiden Steuerpfade 130,140 sind so ausgestaltet, dass i) die Recheneinheiten untereinander über die Signalleitung 150 kommunizieren können (beispielsweise mittels Serial Peripheral Interface (SPI), Universal Asynchronous Receiver Transmitter (UART), etc.), und (ii) die beiden Steuerpfade 130,140 zumindest soweit voneinander unabhängig sind, dass ein Fehler in einer Hardwarekomponente eines Steuerpfades nicht zu einer Fehlerkaskade in einer Hardwarekomponente in dem anderen Steuerpfad führt, wobei die Trennung der beiden Steuerpfade beispielsweise durch festzugeordnete Stromleitungen und Masseleitungen, Isolation von Steuerpfaden und dergleichen erfolgen kann. Die Software der Steuerpfade 130,140 ist jeweils bevorzugt so ausgelegt, dass sie sowohl Fehler in der Hardware als auch in der Software selbst innerhalb eines Steuerpfades erkennt und eine Unterbrechung oder Abschaltung der Lenkkraftunterstützung des fehlerhaften Steuerpfades herbeiführt.

Im fehlerfreien Zustand können theoretisch beide Steuerpfade 130,140 mittels des gemessenen Drehmomentes und weiteren Messwerten die Berechnung des Motor-Soll-Drehmomentes vornehmen und den entsprechenden Motor 91,92,9 ansteuern. Unter "fehlerfrei" ist dabei nicht zwangsläufig zu verstehen, dass gar kein Fehler vorliegt. So sind beispielsweise Sensoren bereits an sich redundant ausgebildet, so dass ein Fehler in einem Sensorelement nicht zum Ausfall des kompletten Sensors führt. Unter "fehlerfrei" ist daher zu verstehen, dass genug fehlerfrei funktionierende Hardware vorhanden ist, mit der der Steuerpfad ordnungsgemäß die Berechnungen und die Ansteuerung des Motors vornehmen kann.

Im fehlerfreien Zustand übernimmt die primäre Recheneinheit 133 die Berechnung der Motor-Soll-Drehmomente. Das sekundäre Motor-Soll-Drehmoment wird über die Signalleitung 150 an die sekundäre Recheneinheit 143 weitergegeben. Die primäre Recheneinheit 133 und die sekundäre Recheneinheit 143 führen daraufhin die Motorregelung des zugewiesenen Motors durch. Der Treiber und das Leistungs-Modul steuern den Motor an. Die sekundäre Motorregelung gibt dabei Feedback über das vom sekundären Motor aufgebrachten Drehmomentes an die primäre Recheneinheit mittels der Signalleitung 150.

Beide Steuerpfade 130,140 sind jeweils als "fail-silent" ausgelegt, d.h. bei Vorliegen eines Fehlers wird die Lenkkraftunterstützung des fehlerhaften Steuerpfades 130,140 abgestellt und der fehlerhafte Steuerpfad 130,140 beendet die Kommunikation über die Signalleitung 150 mit dem fehlerfreien Steuerpfad 130,140. Durch das Stoppen der Kommunikation kann von dem fehlerfreien Steuerpfad 130,140 das Vorliegen eines Fehlers in dem fehlerhaften Steuerpfad 130,140 erkannt werden. Es wird daher kein aktives Monitoring des Zustandes der Steuerpfade 130,140 durchgeführt. Ein Ausfall eines Steuerpfades 130,140 liegt dann vor, wenn nicht genug Ressourcen zur Verfügung stehen, um die notwendigen Messungen, Berechnungen und Steuerbefehle zur Ansteuerung eines Motors auszuführen. Dies kann beispielsweise ein Kurzschluss in einer Motorwindung, ein Fehler in einer Halbbrücke eines FETs, eine Fehlfunktion des GDU oder eine Fehlfunktion der Recheneinheit und usw. sein.

Kommt es zu einem Ausfall des sekundären Steuerpfades 140, wird die Lenkkraftunterstützung durch den sekundären Motor 92 oder der sekundären Wicklungsgruppe abgeschaltet. Das heißt nicht zwangsläufig, dass der gesamte sekundäre Steuerpfad 140, insbesondere die sekundäre Recheneinheit 143 und/oder die Sensoren, nicht mehr zur Verfügung stehen. Der primäre Steuerpfad 130 führt die Berechnung des primären Motor-Soll-Drehmoments durch und steuert den primären Motor 91 oder die primäre Wicklungsgruppe an. Die Hilfskraftunterstützung kann so zumindest zu einem Teil aufrecht gehalten werden. Eine Änderung der Software des primären Steuerpfades 130 ist dafür nicht notwendig.

Kommt es zu einem Ausfall des primären Steuerpfades 130, wird analog die Lenkkraftunterstützung durch den primären Motor 91 oder der primären Wicklungsgruppe abgeschaltet. Die sekundäre Recheneinheit 143 übernimmt die anhand des vom Fahrer in das Lenkrad eingebrachten Drehmoments 111 und weiteren Eingangsgrößen die Berechnung des sekundären Motor-Soll-Drehmoments und der sekundäre Motor 92 oder die sekundäre Wicklungsgruppe wird entsprechend mittels des sekundären Steuerpfades 140 angesteuert. Dazu wird ein Lenkungsalgorithmus in der sekundären Recheneinheit 143 zur Berechnung des sekundären Motor-Soll-Drehmoments gestartet.

Befindet sich die Steuergerät bereits in einem der beiden zuvor beschriebenen Fehlerzustände und wird ein weiterer Fehler in dem bis dahin fehlerfreien Steuerpfad detektiert, so führt dies zum Abschalten der gesamten Lenkkraftunterstützung.

Es kann vorteilhaft sein, die CPUs der beiden Mikrokontroller 133,143 zur Einsparung von Kosten unterschiedlich auszulegen. Die Datenverarbeitungs-Ressource der sekundären Recheneinheit 133 kann niedriger sein, als die des primären Steuerpfades, denn für den Fall, das ein Fehler im primären Steuerpfad zum Ausfall des primären Steuerpfades führt, befindet sich das Steuergerät bereits in einem eingeschränkten Betriebsmodus und es ist wahrscheinlich, dass nur noch die Hälfte des nominalen Unterstützungsdrehmoments zur Verfügung steht. In diesem Fall kann der semi-autonome Fahrmodus nicht mehr gewährleistet werden, so dass der sekundäre Mikrokontroller, der die Berechnung des Motor-Soll-Drehmomentes übernimmt, deutlich leistungsärmer und somit kostengünstiger ausgebildet sein kann.

Es kann weiterhin aus Kostengründen auf den Kraftfahrzeug-Bus des sekundären Steuerpfades verzichtet werden. Dies ist sinnvoll für den Fall, dass (i) das Steuergerät nur die Erlaubnis hat im fehlerfreien Fall mit dem Fahrzeug zu kommunizieren oder (ii) der primäre Kommunikationsbus bereits redundant ausgelegt ist.

Aus Kostengründen kann es auch vorgesehen sein, auf eine redundante Stromversorgung zu verzichten. Dies ist sinnvoll, falls die Fehlerrate der Stromversorgung akzeptabel ist oder das Fahrzeug eine redundante Stromversorgung nicht gewährleisten kann. Beide Steuerpfade werden dabei an einen gemeinsamen Stromanschluss angeschlossen.

Die Erfindung ist im Allgemeinen auf beliebig viele Steuerpfade skalierbar. Das zuvor beschriebene Vorliegen von zwei Steuerpfaden ist nur ein Beispiel.

## Patentansprüche

1. Verfahren zur Bereitstellung einer Lenkkraftunterstützung für ein elektromechanisches Lenksystem eines Kraftfahrzeuges aufweisend ein mit einer unteren Lenkwelle (4) verbundenes Lenkritzel (5), welches mit einer in einem Gehäuse entlang einer Längsachse verschieblich gelagerten Zahnstange (6) zur Lenkung von Rädern (8) in Eingriff steht, wenigstens zwei Elektromotoren (91,92) oder einen Elektromotor (9) mit wenigstens zwei Wicklungsgruppen zur Lenkkraftunterstützung, einen Drehmomentsensor (11), der zwischen einer mit dem Lenkrad verbundenen oberen Lenkwelle (3) und der unteren Lenkwelle (4) angeordnet ist, und eine elektronische Steuereinheit (12) zur Berechnung der Lenkunterstützung, wobei die elektronische Steuereinheit (12) ein redundantes Steuergerät (13) mit einem primären Steuerpfad (130) und einem sekundären Steuerpfad (140) umfasst, wobei der primäre Steuerpfad (130) eine primäre Recheneinheit (133), eine primäre Treiberstufe (135) und ein primäres Leistungs-Modul (136) aufweist, und dass der sekundäre Steuerpfad (140) eine sekundäre Recheneinheit (143), eine sekundäre Treiberstufe (145) und ein sekundäres Leistungs-Modul (146) aufweist, und dass das Verfahren folgende Schritte aufweist:
• Erfassen eines vom Fahrer aufgebrachten Lenkdrehmomentes (111) mittels des Drehmomentsensors (11),
• Im fehlerfreien Fall, Berechnen eines primären und eines sekundären Motor-Soll-Drehmomentes in der primären Recheneinheit (133) in Abhängigkeit des vom Fahrer aufgebrachten Lenkdrehmomentes (111) und weiteren Eingangsgrößen,
• Weitergabe des primären Motor-Soll-Drehmomentes an eine primäre Motorregelung (138) der primären Recheneinheit (133),
• Bestimmen von primären Motorströmen zum Betreiben eines primären Elektromotors (91) oder einer primären Wicklungsgruppe des Elektromotors (9) in der primären Motorreglung (138),
• Weitergabe des sekundären Motor-Soll-Drehmomentes von der primären Recheneinheit (133) mittels einer Signalleitung (150) an eine sekundäre Motorregelung (148) der sekundären Recheneinheit (143),
• Bestimmen von sekundären Motorströmen zum Betreiben eines sekundären Elektromotors (92) oder einer sekundären Wicklungsgruppe des Elektromotors (9) in der sekundären Motorreglung (148) der sekundären Recheneinheit (143),
• Detektieren eines Fehlerzustandes in einem der Steuerpfade (130,140) durch den fehlerbehafteten Steuerpfad (130,140),
• Abschalten der Lenkkraftunterstützung des fehlerbehafteten Steuerpfades (133,143), wobei
• in einem Fehlerzustand eines der Steuerpfade (130,140) der fehlerbehaftete Steuerpfad (130,140) die Kommunikation mit der fehlerfreien Recheneinheit (133,143) über die Signalleitung (150) einstellt und der fehlerfreie Steuerpfad (130,140) den Fehlerzustand anhand der fehlenden Kommunikation detektiert.

2. Verfahren nach Anspruch 1, **dadurch gekennzeichnet, dass** das Verfahren folgende weitere Schritte aufweist:
• Falls der primäre Steuerpfad (130) einen Fehler aufweist, Abschalten der Lenkkraftunterstützung durch den primären Elektromotor (91) oder der primären Windung des Elektromotors (9),
• Berechnen des sekundären Motor-Soll-Drehmomentes in der sekundären Recheneinheit (143) in Abhängigkeit des vom Fahrer aufgebrachten Lenkdrehmomentes (111) und weiteren Eingangsgrößen,
• Weitergabe des sekundären Motor-Soll-Drehmomentes an die sekundäre Motorregelung (148) der sekundären Recheneinheit (143),
• Bestimmen der sekundären Motorströme zum Betreiben des sekundären Elektromotors (92) oder einer sekundären Wicklungsgruppe des Elektromotors (9) in der sekundären Motorreglung (148) der sekundären Recheneinheit (143).

3. Verfahren nach einem der vorhergehenden Ansprüche, **dadurch gekennzeichnet, dass** die primäre Recheneinheit (133) an einen primären Kraftfahrzeug-Bus (137) angeschlossen ist, wobei die sekundäre Recheneinheit (143) mit dem Kraftfahrzeug über den primären Kraftfahrzeug-Bus (137) mittels der zwischen der primären und sekundären Recheneinheit (133,143) vorhandenen Signalleitung (150) kommuniziert.

4. Verfahren nach einem der vorhergehenden Ansprüche 1 oder 2, **dadurch gekennzeichnet, dass** der primäre Steuerpfad (130) an einen primären Kraftfahrzeug-Bus (137) angeschlossen ist und der sekundäre Steuerpfad (140) an einen vom primären Kraftfahrzeug-Bus (137) getrennten sekundären Kraftfahrzeug-Bus (147) angeschlossen ist.

5. Verfahren nach einem der vorhergehenden Ansprüche, **dadurch gekennzeichnet, dass** die weiteren Eingangsgrößen wenigstens eine von folgenden Größen umfasst: Fahrzeuggeschwindigkeit (v), mittels eines Rotorlagesensors (134,144) gemessene momentane Rotorposition, gemessenen Stromwerte in den Phasenwicklungen.

6. Verfahren nach einem der vorhergehenden Ansprüche, **dadurch gekennzeichnet, dass** der primäre Steuerpfad (130) und der sekundäre Steuerpfad (140) jeweils einen an die Stromversorgung angeschlossenen integrierten Schaltkreis (132,142) aufweisen, der die Stromüberwachung der entsprechenden Recheneinheit (133,143) und eines Rotorlagesensors (134,144) übernimmt.

7. Verfahren nach einem der vorhergehenden Ansprüche, **dadurch gekennzeichnet, dass** der primäre Steuerpfad (130) und der sekundäre Steuerpfad (140) jeweils eine externe Stromversorgung (131,141) aufweisen.

8. Verfahren nach einem der vorhergehenden Ansprüche, **dadurch gekennzeichnet, dass** die sekundäre Recheneinheit (143) leistungsärmer als die primäre Recheneinheit (133) ausgebildet ist.

9. Verfahren nach einem der vorhergehenden Ansprüche, **dadurch gekennzeichnet, dass** die primäre und sekundäre Recheneinheit (133,143) eine MCU ist.

10. Verfahren nach einem der vorhergehenden Ansprüche, **dadurch gekennzeichnet, dass** die integrierten Schaltkreise (132,142) SBCs sind.

11. Elektromechanisches Lenksystem für ein Kraftfahrzeug aufweisend
• ein mit einer unteren Lenkwelle (4) verbundenes Lenkritzel (5), welches mit einer in einem Gehäuse entlang einer Längsachse verschieblich gelagerten Zahnstange (6) zur Lenkung von Rädern (8) in Eingriff steht,
• wenigstens einen Elektromotor (9,91,92) zur Lenkkraftunterstützung,
• einen Drehmomentsensor (11), der zwischen einer mit dem Lenkrad verbundenen oberen Lenkwelle (3) und der unteren Lenkwelle (4) angeordnet ist und ein vom Fahrer eingebrachtes Drehmoment (111) erfasst, und
• eine elektronische Steuereinheit (12) zur Berechnung der Lenkkraftunterstützung, die ein redundantes Steuergerät (13) aufweist, das dazu ausgebildet ist, das Verfahren nach einem der vorhergehenden Ansprüche auszuführen.

## Claims

1. Method for providing steering assistance for an electromechanical steering system of a motor vehicle having a steering pinion (5) connected to a lower steering shaft (4), which engages a rack (6) mounted in a housing to be movable along a longitudinal axis for steering wheels (8), at least two electric motors (91,92) or one electric motor (9) with at least two winding groups for steering assistance, a torque sensor (11) arranged between an upper steering shaft (3) connected to the steering wheel and the lower steering shaft (4), and an electronic control unit (12) for calculating the steering assistance, wherein the electronic control unit (12) comprises a redundant control device (13) with a primary control path (130) and a secondary control path (140), wherein the primary control path (130) has a primary computing unit (133), a primary gate driver module (135) and a primary power module (136) , and that the secondary control path (140) has a secondary computing unit (143), a secondary gate driver module (145), and a secondary power module (146), and that the method has the following steps:
• Detecting a steering torque (111) applied by the driver using the torque sensor (11),
• In the fault-free case, calculating a primary motor target torque and a secondary motor target torque in the primary computing unit (133) as a function of the steering torque (111) applied by the driver and other input variables,
• Transferring the primary motor target torque to a primary motor controller (138) of the primary computing unit (133),
• Determining primary motor currents for operating a primary electric motor (91) or a primary winding group of the electric motor (9) in the primary motor controller (138),
• Transferring the secondary motor target torque from the primary computing unit (133) by means of a signal line (150) to a secondary motor controller (148) of the secondary computing unit (143),
• Determining secondary motor currents for the operation of a secondary electric motor (92) or a secondary winding group of the electric motor (9) in the secondary motor controller (148) of the secondary computing unit (143),
• Detecting a fault state in one of the control paths (130,140) by the faulty control path (130,140),
• Switching off the steering assistance of the faulty control path (133,143), wherein
• In a fault state of one of the control paths (130,140), the faulty control path (130,140) stops the communication with the fault-free computing unit (133,143) over the signal line (150) and the fault-free control path (130,140) detects the fault state on the basis of the missing communication.

2. Method according to claim 1, **characterized in that** the method has the following further steps:
• If the primary control path (130) has a fault, switching off the steering assistance by the primary electric motor (91) or the primary winding of the electric motor (9),
• Calculating the secondary motor target torque in the secondary computing unit (143) as a function of the steering torque (111) applied by the driver and other input variables,
• Transferring the secondary motor target torque to the secondary motor controller (148) of the secondary computing unit (143),
• Determining the secondary motor currents for operating the secondary electric motor (92) or a secondary winding group of the electric motor (9) in the secondary motor controller (148) of the secondary computing unit (143).

3. Method according to any one of the preceding claims, **characterized in that** the primary computing unit (133) is connected to a primary motor vehicle bus (137), wherein the secondary computing unit (143) communicates with the motor vehicle via the primary motor vehicle bus (137) by means of the signal line (150) present between the primary and secondary computing units (133,143).

4. Method according to one of the preceding claims 1 or 2, **characterized in that** the primary control path (130) is connected to a primary motor vehicle bus (137) and the secondary control path (140) is connected to a secondary motor vehicle bus (147) which is separated from the primary motor vehicle bus (137).

5. Method according to any one of the preceding claims, **characterized in that** the further input variables include at least one of the following variables: vehicle speed (v), instantaneous rotor position measured by means of a rotor position sensor (134,144), measured current values in the phase windings.

6. Method according to any one of the preceding claims, **characterized in that** the primary control path (130) and the secondary control path (140) each have an integrated circuit connected to the power supply (132,142), which takes on the current monitoring of the corresponding computing unit (133,143) and a rotor position sensor (134,144).

7. Method according to any one of the preceding claims, **characterized in that** the primary control path (130) and the secondary control path (140) each has an external power supply (131,141).

8. Method according to any one of the preceding claims, **characterized in that** the secondary computing unit (143) is designed to be less powerful than the primary computing unit (133).

9. Method according to any one of the preceding claims, **characterized in that** the primary and secondary computing unit (133,143) is an MCU.

10. Method according to any one of the preceding claims, **characterized in that** the integrated circuits (132,142) are SBCs.

11. Electromechanical steering system for a motor vehicle, having
• a steering pinion (5) connected to a lower steering shaft (4), which engages a rack (6) for steering wheels (8) which is mounted in a housing so as to be movable along a longitudinal axis,
• at least one electric motor (9,91,92) for steering assistance,
• a torque sensor (11) which is placed between an upper steering shaft (3) connected to the steering wheel and the lower steering shaft (4) and which detects a torque (111) introduced by the driver, and
• an electronic control unit (12) for calculating the steering assistance, which has a redundant control device (13) designed to perform the method according to any one of the preceding claims.

## Revendications

1. Procédé de fourniture d'une assistance à la force de direction pour un système de direction électromécanique d'un véhicule automobile, possédant un pignon de direction (5) relié à un arbre de direction inférieur (4), lequel est en prise avec une crémaillère (6) montée en translation le long d'un axe longitudinal dans un boîtier pour l'orientation de roues (8), au moins deux moteurs électriques (91, 92) ou un moteur électrique (9) pourvu d'au moins deux groupes d'enroulements pour l'assistance à la force de direction, un capteur de couple (11), lequel est disposé entre un arbre de direction supérieur (3) relié au volant de direction et l'arbre de direction inférieur (4), et une unité de commande électronique (12) destinée à calculer l'assistance à la direction, l'unité de commande électronique (12) comportant un contrôleur (13) redondant ayant un chemin de commande primaire (130) et un chemin de commande secondaire (140), le chemin de commande primaire (130) possédant une unité de calcul primaire (133), un étage d'attaque primaire (135) et un module de puissance primaire (136), et le chemin de commande secondaire (140) possédant une unité de calcul secondaire (143), un étage d'attaque secondaire (145) et un module de puissance secondaire (146), et le procédé comprenant les étapes suivantes :
* détection d'un couple de direction (111) appliqué par le conducteur au moyen du capteur de couple (11),
* en cas d'absence de défaut, calcul d'un couple de consigne de moteur primaire et secondaire dans l'unité de calcul primaire (133) en fonction du couple de direction (111) appliqué par le conducteur et d'autres grandeurs d'entrée,
* retransmission du couple de consigne de moteur primaire à une régulation de moteur primaire (138) de l'unité de calcul primaire (133),
* détermination de courants de moteur primaires pour faire fonctionner un moteur électrique primaire (91) ou un groupe d'enroulements primaire du moteur électrique (9) dans la régulation de moteur primaire (138),
* retransmission du couple de consigne de moteur secondaire de l'unité de calcul primaire (133) à une régulation de moteur secondaire (148) de l'unité de calcul secondaire (143) au moyen d'une ligne de signal (150),
* détermination de courants de moteur secondaires pour faire fonctionner un moteur électrique secondaire (92) ou un groupe d'enroulements secondaire du moteur électrique (9) dans la régulation de moteur secondaire (148) de l'unité de calcul secondaire (143),
* détection d'un état de défaut dans l'un des chemins de commande (130, 140) par le chemin de commande (130, 140) défectueux,
* mise hors circuit de l'assistance à la force de direction du chemin de commande (133, 143) défectueux,
* dans un état de défaut de l'un des chemins de commande (130, 140), le chemin de commande (130, 140) défectueux cesse la communication avec l'unité de calcul (133, 143) exempte de défaut par le biais de la ligne de signal (150) et le chemin de commande (130, 140) exempt de défaut détecte l'état de défaut à l'aide de la communication manquante.

2. Procédé selon la revendication 1, **caractérisé en ce que** le procédé comprend les étapes supplémentaires suivantes :
* dans le cas où le chemin de commande primaire (130) présente un défaut, mise hors circuit de l'assistance à la force de direction par le moteur électrique primaire (91) ou l'enroulement primaire du moteur électrique (9),
- calcul du couple de consigne de moteur secondaire dans l'unité de calcul secondaire (143) en fonction du couple de direction (111) appliqué par le conducteur et d'autres grandeurs d'entrée,
* retransmission du couple de consigne de moteur secondaire à la régulation de moteur secondaire (148) de l'unité de calcul secondaire (143),
* détermination de courants de moteur secondaires pour faire fonctionner le moteur électrique secondaire (92) ou un groupe d'enroulements secondaire du moteur électrique (9) dans la régulation de moteur secondaire (148) de l'unité de calcul secondaire (143).

3. Procédé selon l'une des revendications précédentes, **caractérisé en ce que** l'unité de calcul primaire (133) est raccordée à un bus de véhicule automobile primaire (137), l'unité de calcul secondaire (143) communiquant avec le véhicule automobile par le biais du bus de véhicule automobile primaire (137) au moyen de la ligne de signal (150) présente entre les unités de calcul primaire et secondaire (133, 143).

4. Procédé selon l'une des revendications 1 ou 2, **caractérisé en ce que** le chemin de commande primaire (130) est raccordé au bus de véhicule automobile primaire (137) et le chemin de commande secondaire (140) est raccordé à un bus de véhicule automobile secondaire (147) séparé du bus de véhicule automobile primaire (137).

5. Procédé selon l'une des revendications précédentes, **caractérisé en ce que** les grandeurs d'entrée supplémentaires comprennent au moins l'une des grandeurs suivantes : vitesse du véhicule (v), position momentanée du rotor mesurée au moyen d'un capteur de position de rotor (134, 144), valeurs de courant mesurées dans les enroulements de phase.

6. Procédé selon l'une des revendications précédentes, **caractérisé en ce que** le chemin de commande primaire (130) et le chemin de commande secondaire (140) possèdent respectivement un circuit intégré (132, 142) raccordé à l'alimentation électrique, lequel prend en charge la surveillance du courant de l'unité de calcul (133, 143) correspondante et d'un capteur de position de rotor (134, 144) .

7. Procédé selon l'une des revendications précédentes, **caractérisé en ce que** le chemin de commande primaire (130) et le chemin de commande secondaire (140) possèdent respectivement une alimentation électrique (131, 141) externe.

8. Procédé selon l'une des revendications précédentes, **caractérisé en ce que** l'unité de calcul secondaire (143) est configurée moins puissante que l'unité de calcul primaire (133).

9. Procédé selon l'une des revendications précédentes, **caractérisé en ce que** l'unité de calcul primaire et secondaire (133, 143) est une MCU.

10. Procédé selon l'une des revendications précédentes, **caractérisé en ce que** les circuits intégrés (132, 142) sont des SBC.

11. Système de direction électromécanique pour un véhicule automobile, possédant
* un pignon de direction (5) relié à un arbre de direction inférieur (4), lequel est en prise avec une crémaillère (6) montée en translation le long d'un axe longitudinal dans un boîtier pour l'orientation de roues (8),
* au moins un moteur électrique (9, 91, 92) pour l'assistance à la force de direction,
* un capteur de couple (11), lequel est disposé entre un arbre de direction supérieur (3) relié au volant de direction et l'arbre de direction inférieur (4) et détecte un couple de direction (111) appliqué par le conducteur, et
* une unité de commande électronique (12) destinée à calculer l'assistance à la direction, laquelle possède un contrôleur (13) redondant qui est configuré pour mettre en œuvre le procédé selon l'une des revendications précédentes.
